# EUROPEAN PATENT APPLICATION

(11) **EP 1 156 426 A2**
(43) Date of publication of application: **21.11.2001**
(21) Application number: 01111473.3
(22) Date of filing: 10.05.2001
(51) Int. Cl.: G06F 17/30, H04N 1/21

(54) **Content managing system, content managing method, and camera apparatus**

(30) Priority: 15.05.2000 JP 2000141760
(71) Applicant: SONY CORPORATION, Tokyo (JP)
(72) Inventor: Kurihara, Junichi, Shinagawa-ku, Tokyo (JP); Akashi, Tatsuya, Shinagawa-ku, Tokyo (JP); Ozaki, Junko, Shinagawa-ku, Tokyo (JP); Munenaka, Mika, Shinagawa-ku, Tokyo (JP)
(74) Representative: MÜLLER & HOFFMANN Patentanwälte

(57) **Abstract**

A content managing system is disclosed, that has a content managing portion comprising a customer file storing means, having a plurality of areas, assigned to individual users, for storing files of contents for the users, and a customer file managing means for managing the customer file storing means, wherein the content managing portion and a user terminal unit are connected through a network, and wherein the user terminal unit operates the content managing portion through the network so as to manage the files of the contents for the users, the content managing system comprising a dedicated device for uploading a content to each user area.

## Description

### BACKGROUND OF THE INVENTION

### Field of the Invention

The present invention relates to a content managing system, a content managing method, and a camera suitably used in a system that allows files of contents of moving pictures, still pictures, and music programs to be totally managed.

### Description of the Related Art

A service that provides files of contents of moving pictures, still pictures, music programs, and so forth through a network is becoming attractive. In such a conventional content delivering service, when a user purchases a content, he or she accesses a particular server that delivers the content through a user terminal unit and downloads the file of the content through the network.

In recent years, servers that deliver contents of moving pictures, still pictures, music programs, and so forth have been used on a network. When such a service is used, a user terminal unit is connected to a server that delivers a content through the network. When the user terminal unit is connected to such a server, the content name and the data about each content that the server provides are displayed. When the user purchases the content, the user terminal unit transmits a download request for the desired content to the server.

When the server receives the download request for the desired content, the server retrieves the file of the desired content from a predetermined library and transfers the retrieved file to the user terminal unit through the network. The file of the content is stored to a hard disk drive or the like of the user terminal unit.

In such a manner, in the conventional content delivery service, when a user purchases a content, the file of the content is directly transferred from the server to the user terminal unit through the network. However, since the data amount of the file of a content of a moving picture, a still picture, a music program, or the like is large, it takes a long time to download the file. Sometimes, the download of the file may fail.

In addition, the capacity of the storage of the user terminal unit is limited. When the conventional content delivery service is used, the storage becomes full with files of contents having large data amounts. Thus, it becomes difficult to manage the files. Moreover, when the user terminal unit manages the files of contents, they may be destroyed or mistakenly erased.

To solve such a problem, the applicant of the present invention has proposed a system that allows a user to easily purchase the file of a content and that integrally manages contents.

In the proposed system, a content managing company has a content library, a library managing server, a customer file storage, a customer file managing server, a delivery managing database, and a delivery managing server. The content library stores many contents that the content managing company provides and sells. The library managing server manages the content library. The customer file storage stores contents of users. The customer file managing server manages the customer file storage. The delivery managing database stores delivery information. The delivery managing server manages the delivery of contents. User areas for individual users are assigned in the customer file storage.

The customer file storage provides a user area for storing a content to a user who made a contract with the content managing company. The user can freely use the user area of the customer file storage in the range of the contracted capacity while the contract is valid. The user can add, delete, and move a content stored in the user area. In addition, the user can store the file of a content that he or she has purchased to the user area.

To allow such a service of the content managing company to become attractive, it is preferred to provide a service that each user can actively join and that is attractive as well as functions for providing, selling, and searching contents.

To use such a service, the user should make a contract with the content managing company. In addition, whenever the user logs in the site of the content managing company, he or she should input the user ID and the password assigned to him or her. Thus, the operability is bad. Moreover, at that point, the password of the user may be leaked out to the outside.

### OBJECTS AND SUMMARY OF THE INVENTION

Therefore, an object of the present invention is to provide a content managing system, a content managing method, and a camera apparatus that allow a content managing service performed on the network and its operability to be improved.

A first aspect of the present invention is a content managing system having a content managing portion comprising a customer file storing means, having a plurality of areas, assigned to individual users, for storing files of contents for the users, and a customer file managing means for managing the customer file storing means, wherein the content managing portion and a user terminal unit are connected through a network, and wherein the user terminal unit operates the content managing portion through the network so as to manage the files of the contents for the users, the content managing system comprising a dedicated device for uploading a content to each user area.

A second aspect of the present invention is a content managing method having a content managing portion for assigning areas of a storage to individual users and storing files of contents for the individual users to the areas for the individual users, the content managing portion and a user terminal unit being connected through a network, the user terminal unit operating the content managing portion through the network so as to manage the files of the contents for the users, the method comprising the step of providing a dedicated device for uploading a content to each user area.

A content managing company has a content library, a library managing server, a customer file storage, a customer file managing server, a delivery managing database, and a delivery managing server. The content library stores many contents that the content managing company provides and sells. The library managing server manages the content library. The customer file storage stores contents of users. The customer file managing server manages the customer file storage. The delivery managing database stores delivery information. The delivery managing server manages the delivery of contents. User areas for individual users are assigned in the customer file storage. A user terminal unit is connected to a server of the content managing company through a network.

The customer file storage provides a user area for storing a content to a user who made a contract with the content managing company. The user can freely use the user area of the customer file storage in the range of the contracted capacity while the contract is valid. The user can add, delete, and move a content stored in the user area. In addition, the user can store the file of a content that he or she has purchased to the user area.

A still picture file that a user photographed is transmitted from the user terminal unit to the customer managing server through the network. The still picture file is uploaded to the user area for the user of the customer file storage.

When the user makes a contract with the content managing company, it delivers or lends a dedicated camera to the user. The dedicated camera has a memory that stores user information.

When the dedicated camera is attached to the user terminal unit, the authenticating process is immediately performed and completed without need to input the user ID and the password of the user. Thereafter, the user can use the service of the content managing company.

Still picture files stored in the dedicated camera are automatically transmitted and stored to the user area of the customer file managing server of the content managing company.

At that point, since picture data that has been formatted in a special manner or encrypted cannot be reproduced by a conventional personal computer, the picture data is restored or decrypted to a normal file. The resultant file is stored to the user area.

These and other objects, features and advantages of the present invention will become more apparent in light of the following detailed description of a best mode embodiment thereof, as illustrated in the accompanying drawings.

### BRIEF DESCRIPTION OF THE DRAWINGS

Fig. 1 is a block diagram showing the overall structure of a content managing system according to the present invention;
Fig. 2 is a schematic diagram for explaining the content managing system according to the present invention;
Fig. 3 is a schematic diagram for explaining the content managing system according to the present invention;
Fig. 4 is a schematic diagram for explaining the content managing system according to the present invention;
Fig. 5 is a schematic diagram for explaining the content managing system according to the present invention;
Fig. 6 is a block diagram showing the structure of a dedicated camera of the content managing system according to the present invention;
Fig. 7 is a flow chart for explaining the content managing system according to the present invention;
Fig. 8 is a schematic diagram for explaining a page in the content managing system according to the present invention;
Fig. 9 is a schematic diagram for explaining a page in the content managing system according to the present invention;
Fig. 10 is a schematic diagram for explaining a page in the content managing system according to the present invention;
Fig. 11 is a schematic diagram for explaining a page in the content managing system according to the present invention;
Fig. 12 is a schematic diagram for explaining a page in the content managing system according to the present invention;
Fig. 13 is a schematic diagram for explaining a page in the content managing system according to the present invention;
Fig. 14 is a schematic diagram for explaining a page in the content managing system according to the present invention;
Fig. 15 is a schematic diagram for explaining a page in the content managing system according to the present invention;
Fig. 16 is a schematic diagram for explaining a page in the content managing system according to the present invention;
Fig. 17 is a schematic diagram for explaining a page in the content managing system according to the present invention;
Fig. 18 is a schematic diagram for explaining a page in the content managing system according to the present invention;
Fig. 19 is a schematic diagram for explaining a page in the content managing system according to the present invention; and
Fig. 20 is a schematic diagram for explaining a page in the content managing system according to the present invention.

### DETAILED DESCRIPTION OF THE PREFERRED EMBODIMENTS

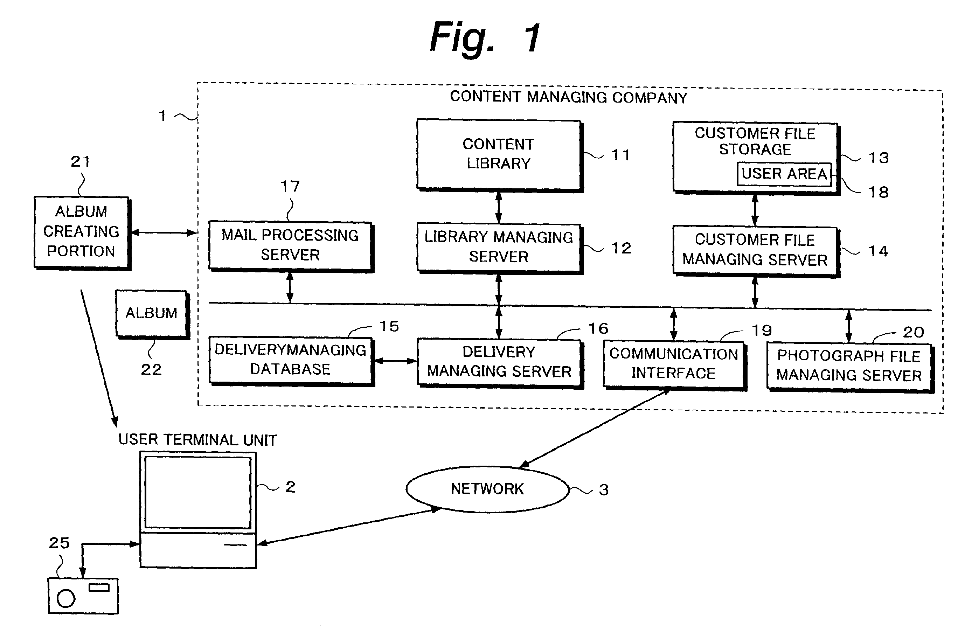

Next, with reference to the accompanying drawings, an embodiment of the present invention will be described. Fig. 1 shows an example of the structure of a system according to the present invention. In Fig. 1, reference numeral 1 is a content managing company. The content managing company 1 totally manages content data of moving pictures such as movies and dramas, content data of still pictures, content data of music programs, and so forth. In addition, the content managing company 1 provides a service for storing contents of users and a service in association therewith as well as a service for selling and providing contents.

The content managing company 1 has a content library 11, a library managing server 12, a customer file storage 13, a customer file managing server 14, a delivery managing database 15, and a delivery managing server 16. The content library 11 stores many contents that the content managing company 1 provides and sells. The library managing server 12 manages the content library 11. The customer file storage 13 stores contents of users. The customer file managing server 14 manages the customer file storage 13. The delivery managing database 15 stores delivery information. The delivery managing server 16 manages the delivery of contents. In addition, the content managing company 1 has a mail processing server 17. The mail processing server 17 exchanges message with customers.

These servers 12, 14, 16, and 17 are connected to a network so that data is exchanged therebetween. In addition, these severs 12, 14, 16, and 17 can be connected to the network 3 through a communication interface 19 such as router. The network 3 is for example the Internet.

These servers 12, 14, 16, and 17 may be accomplished by dedicated computers, respectively. Alternatively, the servers 12, 14, 16, and 17 may be accomplished by a single computer. The content library 11, the customer file storage 13, and the customer database 15 may be accomplished by a storage device of a server or dedicated computers. In addition, these servers 12, 14, 16, and 17 and the content library 11, the customer file storage 13, and the customer database 15 may be managed by different companies rather than the same company.

A user terminal unit 2 is a terminal unit that each user operates. The user terminal unit 2 can be accomplished by a personal computer. The user terminal unit 2 has a communicating function. The user terminal unit 2 can be connected to the network 3. The user terminal unit 2 may be connected to the network 3 through a telephone line, a network service of a CATV (Cable Television), a network service of a cellular phone, a dedicated line, or the like.

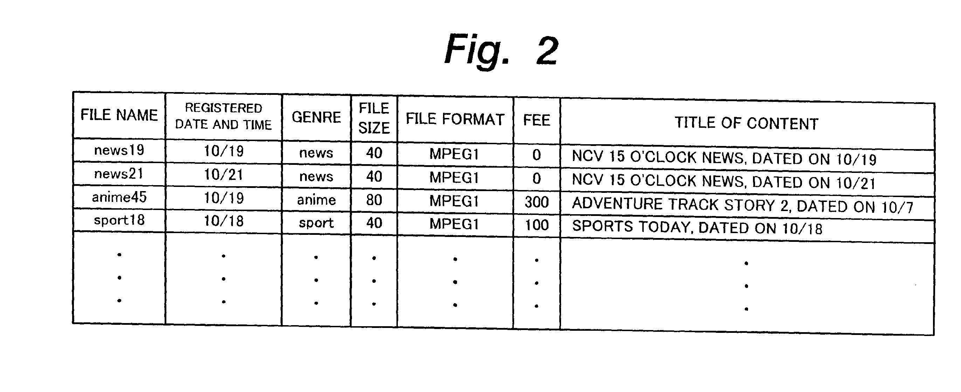

The content library 11 has a storage device having a large storage capacity so that it can store many content data that the content managing company 1 provides and sells. As shown in Fig. 2, the file of each content stored in the content library 11 is managed with "file name", "registered date and time", "genre", "file size", "file format", "fee", and "title of content".

The "file name" is a uniquely designated name of each content file so as to identify it. The "registered date and time" is the date and time at which each content file will be registered or was registered. The "title of content" is a sentence that field represents the title of each content file. The "title of content" may contains a still picture of a typical scene, a moving picture thereof, an audio guide, or the like. The "genre" is information as which each content file is categorized. The "file size" is the size of each content file. The "file size" is normally a value expressed as bytes. Alternatively, the "file size" may be a special parameter corresponding to each file format. For example, in the case of a moving picture, the "file size" may be a value expressed as the reproduction time of the moving picture. The "file format" is information that represents the format of each content file. The "fee" is the fee necessary for purchasing each content file. The "fee" may contain copyright information.

The library managing server 12 manages the content library 11 using the database shown in Fig. 2. When another device on the network transmits a content request to the library managing server 12, it searches the content library 11 for the requested content file and transfers the retrieved content file to the device. In other words, the library managing server 12 has a searching function. When the library managing server 12 receives a keyword, the library managing server 12 searches the content library 11 for a content file that contains the keyword and outputs the searched result. In addition, the library managing server 12 can output the searched result corresponding to the file name, the registered date and time, the genre, the file size, the fee, and the title of content.

In addition to content files stored in the content library 11, the library managing server 12 manages content files that are scheduled to be delivered later. Corresponding to a request received from an external device, the library managing server 12 can provide information about content files that are scheduled to be delivered later and output the searched result. When the library managing server 12 receives a content file that will be newly delivered, the library managing server 12 registers the content file to the content library 11.

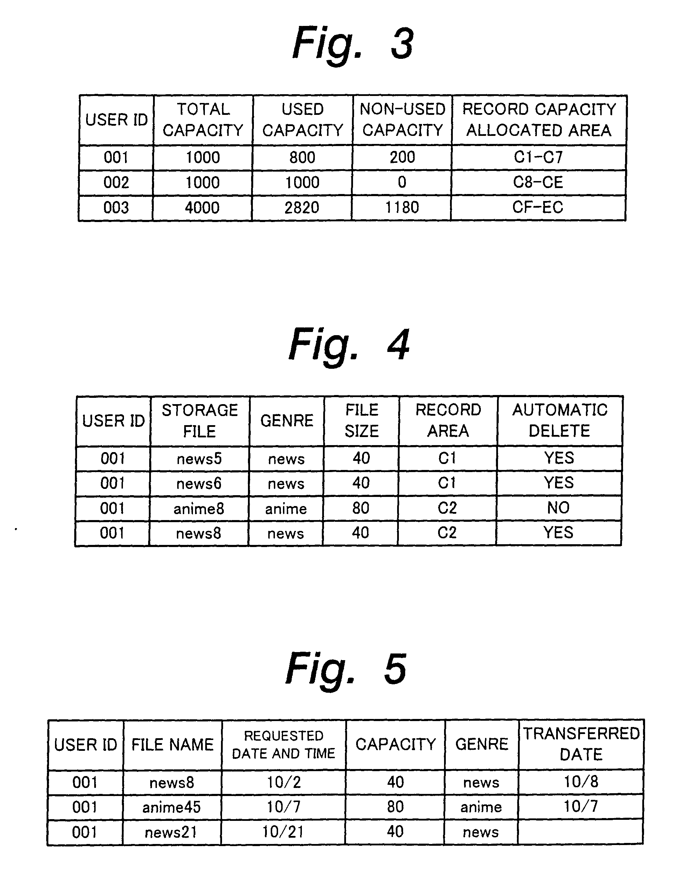

The customer file storage 13 provides a user area 18 that a user who made a contract with the content managing company 1 can use for storing a content. As shown in Fig. 3, the customer file storage 13 assigns a record capacity to each user. Each user is managed with a unique user ID. The total capacity for each user is designated corresponding to a contract that each user made with the content managing company 1. Corresponding to the contract, the total capacity is designated and assigned as the user area 18 for each user. Each user can freely use the assigned user area 18 of the customer file storage 13 in the range of the contracted capacity in the period corresponding to the contract. In other words, each user can store a new content file to the user area 18, delete a content file from the user area 18, move a content file in the user area 18, and download a content file stored in the user area 18 to the user terminal unit 2. The user can upload and store his or her content file to the user area 18.

When the content managing company 1 makes a contract with each user, the content managing company 1 will charge the user corresponding to the size of the user area 18. Of cause, the content managing company 1 can change the size of the user area 18 later.

Each user can purchase content data stored in the content library 11 and a content file that is scheduled to be delivered later. The user can store the purchased content file to the user area 18 of the customer file storage 13. In addition, the user can store a content file that he or she created to the user area 18 of the customer file storage 13.

The customer file managing server 14 manages content files stored in the user area 18 for each user of the customer file storage 13 using a database shown in Fig. 4. The customer file managing server 14 can perform for example a file searching process, a file transferring process, a file deleting process, and so forth. The file managing server 14 prohibits each user from accessing the user area 18 assigned to another user.

As shown in Fig. 4, each user is managed with a unique user ID. Each content file stored by each user is managed with the user ID, the file name, the genre, the file size, and the storage record area. An automatic delete option is added to each content file. When the automatic delete option is added to a content file, the content file is deleted when the user area 18 runs out and no more stores a new content file. Moreover, the customer file managing server 14 performs a record capacity increasing / decreasing process for the user area corresponding to a changed contract, a contract period managing process, and so forth.

The delivery managing server 16 manages the delivery of content data. When the delivery managing server 16 receives a content purchase request from a user, the delivery managing server 16 creates delivery management information for each user in the delivery managing database 15. As shown in Fig. 5, the delivery managing database 15 is managed with the user ID, the file name, the requested date and time, the scheduled file registration date and time, the capacity, the genre, and the file transferred date.

When a user purchases a content, a file purchase request command is transmitted from the user terminal unit 2 to the delivery managing server 16 through the network 3. Corresponding to the purchase request, delivery management information for each user is created in the delivery managing database 15.

The delivery managing server 16 sends a copy command for copying the file to the user area 18 for the user to the library managing server 12. The library managing server 12 searches the content library 11 for a file of a desired content. When the content library 11 contains the file, the library managing server 12 retrieves the file from the content library 11, and sends the retrieved file to the customer file managing server 14. The customer file managing server 14 copies the file to the user area 18 of the customer file storage 13.

Thus, the content purchasing process can be accomplished as a copying process for copying a file from the content library 11 to the user area 18 of the customer file storage 13. Since the capacity of a file of a content of a moving picture is large, it takes a long time to transfer the file. In contrast, according to such a system, since a file is copied between servers on the same network, the content purchasing process can be quickly completed. In addition, a situation of which the download of a file fails does not take place.

A user can access his or her assigned user area 18 through the user terminal unit 2. As was described above, the file of a content that a user purchased is stored in the user area 18. The user can access the user area 18 and download it to the user terminal unit 2 or reproduce it on real time basis (as the streaming reproducing operation).

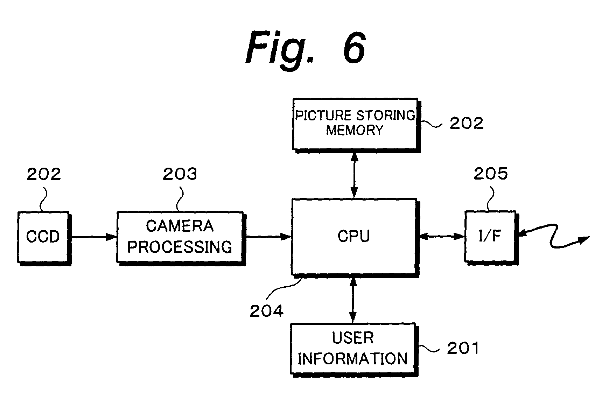

When the user makes a contract with the content managing company 1, it delivers or lends a dedicated camera 25 to the user. As shown in Fig. 6, the dedicated camera 25 has a memory 201 that stores user information.

Fig. 6 shows the structure of the dedicated camera 25. In Fig. 6, an output of a CCD image pickup device 202 is supplied to a camera processing circuit 203. An output of the camera processing circuit 203 is supplied to a microprocessor 204. The microprocessor 204 converts a photographed still picture into a still picture file. The still picture file is converted into a specially formatted file or encrypted so that the file cannot be reproduced by a conventional personal computer. The converted file or encrypted file is stored to a picture storing memory 202. A user information memory 201 is disposed in association with the microprocessor 204. The user information memory 201 stores the personal information of the user. The dedicated camera 25 can be connected to the user terminal unit 2 through an interface 205.

Next, the service provided by the content managing company 1 will be described in reality.

The user terminal unit 2 has a communicating function for connecting it to the network 3. A browser that allows the user to browse web pages is installed to the user terminal unit 2. When the user uses a service provided by the content managing company 1, he or she makes a contract with the content managing company 1. After the user made a contract with the content managing company 1, it assigns a user ID and a password to the user.

At that point, the content managing company 1 delivers the dedicated camera 25 to the user. The content managing company 1 may sell, lend, or distribute the dedicated camera 25 to each of all the users who use the service. Alternatively, the content managing company 1 may sell, distribute, or lend the dedicated camera 25 to only users who want it. Further alternatively, the content managing company 1 may distribute, sell, or lend the dedicated camera to each use for promoting the service.

When a user who made a contract with the content managing company 1 wants to use the service of the content managing company 1, he or she connects the user terminal unit 2 to the network 3, starts up the browser, and accesses the URL (Uniform Resource Locator) of the content managing company 1. When the user terminal unit 2 accesses the URL of the content managing company 1, it transmits an authentication page to the user terminal unit 2.

The authentication page contains a user ID input box and a password input box. The user inputs the user ID and the password assigned by the content managing company 1 to those boxes and then clicks a login button.

When the user inputs the user ID and the password to those boxes and then clicks the login button, the content managing company 1 performs an authenticating process for determining whether or not the accessed user is a user who made a contract with the content managing company 1. When the content managing company 1 has authenticated the user as a valid user, the content managing company 1 transmits a user home page to the user terminal unit 2.

As will be described later, with the dedicated camera 25, such an authenticating process can be omitted. Thus, the user can be automatically logged in.

The user home page is a home page that is dedicated for each user and that is necessary for using the service of the content managing company 1. The user home page displays the user ID of the user, the total capacity of the user area, the used capacity, and so forth. In addition, the user home page displays an indication for checking the used state of the user area of the user, an indication for purchasing a content, and an indication for using various services.

When the user checks for the used state of the user area 18, he or she clicks a predetermined area on the home page. At a result, a user area used state request command is transmitted from the user terminal unit 2. The user area used state request command is transmitted to the customer file managing server 14 through the network 3.

When the customer file managing server 14 receives the user area used state request command, the customer file managing server 14 checks for the used state of the user area 18 corresponding to the user ID of the user. With the managing database shown in Fig. 4, the customer file managing server 14 checks for the used state of the user area 18 for the user and transmits a user stored content list page to the user terminal unit 2. The user can know the used state of the user area 18 on the user stored content list page.

The user can download the file of a content stored in the user area 18 or reproduce it on real time basis (as the streaming reproducing operation).

When the user reproduces the file of a content stored in the user area 18 on real time basis (as the streaming reproducing operation), he or she designate the file name thereof and then clicks a predetermined button. As a result, a streaming reproduction request command for the file is transmitted from the user terminal unit 2. The steaming reproduction request command for the file is transmitted to the customer file managing server 14 through the network 3.

When the customer file managing server 14 receives the steaming reproduction request command from the user terminal unit 2, the customer file managing server 14 retrieves the designated file from the user area 18 and transfers the data of the file to the user terminal unit 2 for the streaming reproducing operation. At that point, the user terminal unit 2 starts up an application for the streaming reproducing operation for a moving picture of the file. When the customer file managing server 14 transmits the data of the file to the user terminal unit 2, the application for the streaming reproducing operation reproduces the content corresponding to the transmitted data.

When the user stores the file of the content, he or she designates the file and clicks a predetermined button. As a result, a file transfer request command is transmitted from the user terminal unit 2. The file transfer request command is transmitted to the customer file managing server 14 through the network 3.

When the customer file managing server 14 receives the file transfer request command, the customer file managing server 14 retrieves the designated file from the user area 18 and transfers the retrieved file to the user terminal unit 2. The file of the content transferred from the customer file managing server 14 is stored to the hard disk drive or the like of the user terminal unit 2.

When the user purchases a content, he or she inputs the file name of the content to a predetermined box of the purchase page. The file name may be selected from a box that contains a plurality of file names. Alternatively, contents may be narrowed down corresponding to the searched result so that the user can select a file name from the narrowed result. When the user inputs the file name and clicks the purchase button, a file purchase request command is transmitted from the user terminal unit 2. The file purchase request command is transmitted to the delivery managing server 16 through the network 3.

When the delivery managing server 16 receives the file purchase request command, the delivery managing server 16 registers the file purchased state to the delivery managing database shown in Fig. 5 and transmits a copy command for copying the file to the user area 18 for the user to the library managing server 12.

When the library managing server 12 receives the copy command, the library managing server 12 searches the content library 11 for the file. When the content library 11 contains the file, the library managing server 12 retrieves the file from the content library 11 and copies the file to the designated user area 18 of the customer file storage 13. As a result, the content purchasing process is completed.

When the requested file is scheduled to be delivered later, the library managing server 12 notifies the delivery managing server 16 of the scheduled delivery date. On the scheduled delivery date, the delivery managing server 16 sends a copy command for copying the file to the user area 18 for the user to the library managing server 12. When the library managing server 12 receives the copy command, the library managing server 12 searches the content library 11 for the file. When the content library 11 contains the file, the library managing server 12 retrieves the file from the content library 11 and copies the file to the designated user area 18 of the customer file storage 13. As a result, the content purchasing process is completed.

After the file of the content corresponding to the purchase request has been copied from the library to the user area 18 of the user and thereby the content purchasing process has been completed, a charging process is performed for the fee of the content.

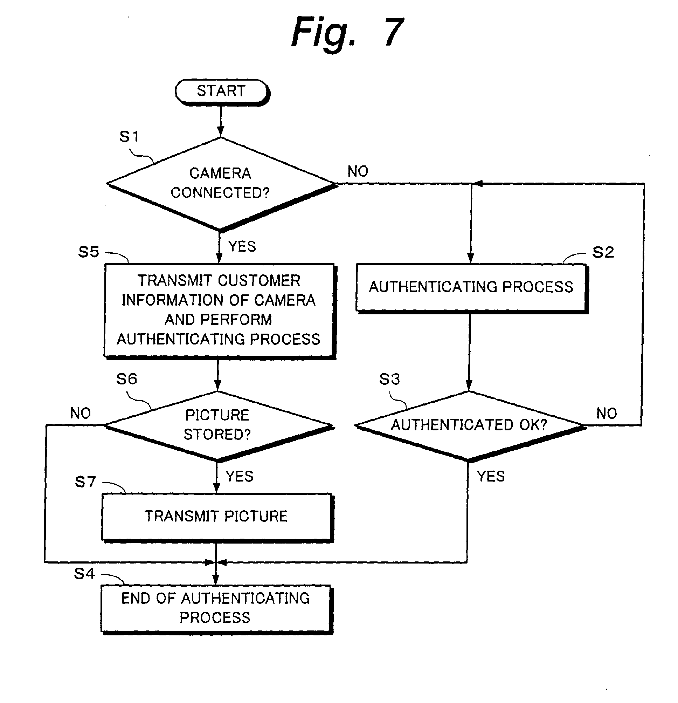

As was described above, when the dedicated camera 25 is used, the user can be automatically logged in. Fig. 7 shows an authenticating process in the case that the dedicated camera 25 is used. As shown in Fig. 7, when the user terminal unit 2 is connected to the site of the content managing company 1, it is determined whether or not the dedicated camera 25 has been connected to the user terminal unit 2 (at step S1). When the determined result at step S1 is No (namely, the dedicated camera 25 has not been connected to the user terminal unit 2), the flow advances to step S2. At step S2, the authenticating process is performed with the user ID and the password that the user has input. At step S3, it is determined whether or not the user is a valid user. When the determined result at step S3 is Yes (namely, the user is a valid user), the authenticating process is completed (at step S4).

In contrast, when the determined result at step S1 is Yes (namely, the dedicated camera 25 has been connected to the user terminal unit 2), the flow advances to step S5. At step S5, the personal information of the user is read from the user information memory 201 of the dedicated camera 25. The personal information is transmitted to the content managing company 1 through the network 3. Thereafter, the authenticating process is performed with the personal information (at step S5). Thereafter, it is determined whether or not a still picture file has been stored in the picture storing memory 202 (at step S6). When the determined result at step S6 is No (namely, a still picture file has not been stored), the authenticating process is completed (at step S4). When the determined result at step S6 is Yes (namely, a still picture file has been stored), the still picture file is transmitted to the customer file managing server 14 of the content managing company 1 and stored to the user area 14 of the customer file storage 13 (at step S7). Thereafter, the authenticating process is completed (at step S4).

Thus, when the dedicated camera 25 is attached to the user terminal unit 2, the authenticating process is immediately performed and completed without need to input the user ID and the password of the user. Thereafter, the user can use the service of the content managing company.

Still picture files stored in the dedicated camera 25 are automatically transmitted and stored to the user area 18 of the customer file managing server 14 of the content managing company 1. At that point, since picture data that has been formatted in a special manner or encrypted cannot be reproduced by a conventional personal computer, the picture data is restored or decrypted to a normal file. The resultant file is stored to the user area 18. A still picture file photographed by the dedicated camera 25 cannot be displayed unless it is uploaded to the user area 18 of the customer file managing server 14 of the content managing company 1. Thus, the data of a content can be protected and the use of the dedicated camera 25 can be promoted.

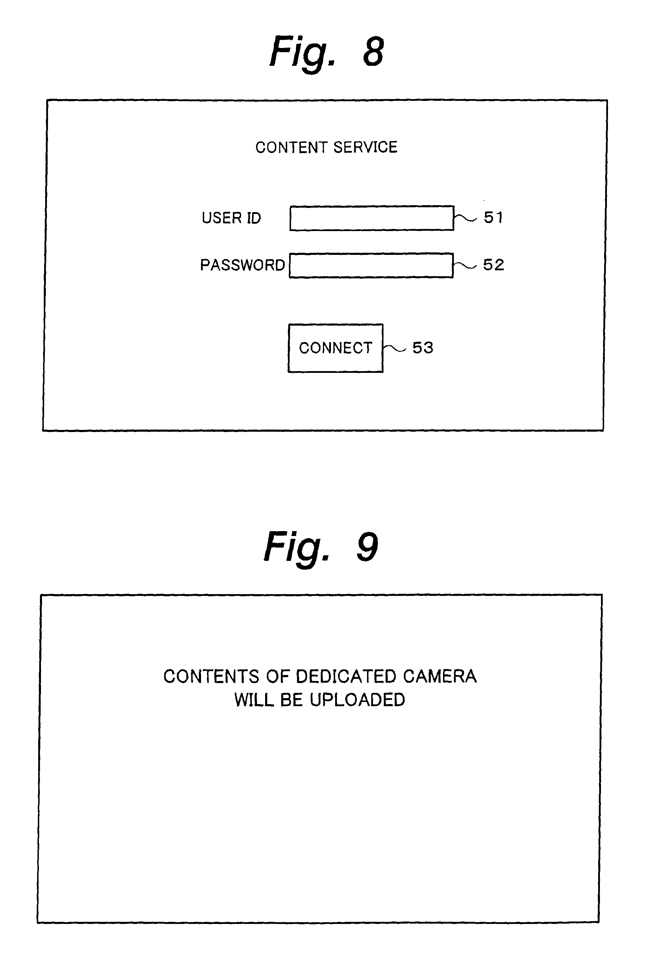

Figs. 8 to 20 show examples of pages provided by the content managing company. When a user who made a contract with the content managing company 1 uses a service thereof, he or she connects the user terminal unit 2 to the network 3, starts up the browser, and accesses the URL of the content managing company 1. When the user terminal unit 2 accesses the URL of the content managing company 1, the content managing company 1 transmits an authentication page shown in Fig. 8 to the user terminal unit 2.

When the dedicated camera 25 has not been connected, the authentication page contains a user ID input box 51 and a password input box 52. The user inputs a user ID and a password assigned by the content managing company 1 to the boxes 51 and 52 and then clicks a login button 53.

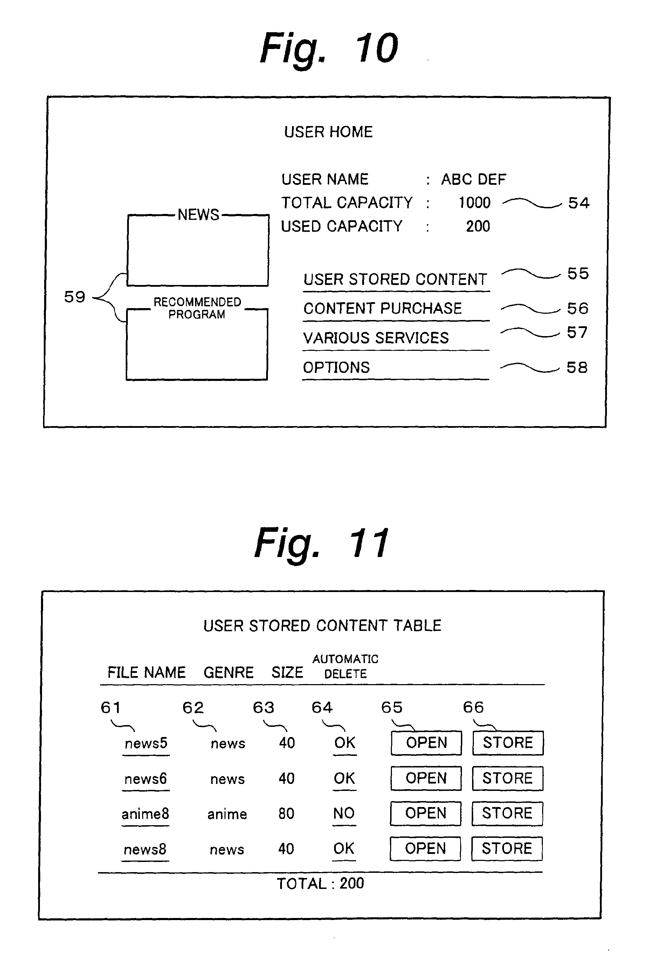

When the user inputs the user ID and the password to the boxes 51 and 52 and clicks the login button 53, the content managing company 1 performs the authenticating process that determines whether or not the user is a valid user who made a contract with the content managing company 1. When the content managing company 1 has authenticated the user as a valid user, the content managing company 1 transmits a user home page shown in Fig. 10 to the user terminal unit 2.

When the dedicated camera 25 has been connected to the user terminal unit 2, such an authenticating process is not required. In other words, an authenticating process is performed with personal information stored in the dedicated camera 25. When a still picture file photographed by the user has been stored in the dedicated camera 25, as shown in Fig. 9, the still picture file stored in the dedicated camera 25 is automatically uploaded. Thereafter, a user home page as shown in Fig. 10 is transmitted to the user terminal unit 2.

The user home page is a home page dedicated for each user who uses a service of the content managing company 1. The user home page displays an indication 54 for the user ID, the total capacity of the user area, the used capacity, and so forth.

The user home page also displays an indication 55 for checking for the used state of the user area 18 for each user, an indication 56 for purchasing a content, an indication 57 for using various services, and an indication 58 for designating various options. The user home page may display an indication 59 for a recommended content.

When the user clicks the indication 55 for checking for the used state of the user area 18, a user area used state request command is transmitted from the user terminal unit 2. The user area used state request command is transmitted to the customer file managing server 14 through the network 3.

When the customer file managing server 14 receives the user area used state request command, the customer file managing server 14 checks for the used state of the user area 18 corresponding to the user ID of the user. The customer file managing server 14 checks for the user area 18 of the user using the management table shown in Fig. 4 and transmits a user stored content list page shown in Fig. 11 to the user terminal unit 2. The user can check for the used state of the user area 18 on the user stored content list page shown in Fig. 11.

The user stored content list page displays a file name indication 61, a genre indication 62, a size indication 63, and a automatic delete YES / NO indication 64. Each row of the user stored content list page displays an open button 65 and a store button 66.

When the user clicks the file name indication 61, a content explanation request command for the file is transmitted from the user terminal unit 2. The content explanation request command for the file is transmitted to the customer file managing server 14 through the network 3.

When the customer file managing server 14 receives the content explanation request command, the customer file managing server 14 checks for the content explanation with the management table shown in Fig. 4 and transmits a content explanation page to the user terminal unit 2. The user can know the content explanation on the content explanation page.

In Fig. 11, when the user clicks the automatic delete YES / NO indication 64, an automatic delete option change command is transmitted from the user terminal unit 2. The automatic delete option change command is transmitted to the customer file managing server 14 through the network 3. When the customer file managing server 14 receives the automatic delete option change command, the customer file managing server 14 changes the automatic delete YES / NO option of the management table shown in Fig. 4.

When the user clicks the open button 65, a streaming reproduction request command for the file is transmitted from the user terminal unit 2. The streaming reproduction request command is transmitted to the customer file managing server 14 through the network 3.

When the customer file managing server 14 receives the streaming reproduction request command, the customer file managing server 14 retrieves the designated file from the user area 18 and transfers the data of the file to the user terminal unit 2 for the streaming reproducing operation. At that point, the user terminal unit 2 starts up the application the steaming reproducing operation for the moving picture. When the customer file managing server 14 transmits the data of the file to the user terminal unit 2, the streaming reproducing application reproduces the content corresponding to the transmitted data.

When the user clicks the store button 66, a transfer request command for the file is transmitted from the user terminal unit 2. The transfer request command for the file is transmitted to the customer file managing server 14 through the network 3.

When the customer file managing server 14 receives the transfer request command for the file, the customer file managing server 14 retrieves the designated file from the user area 18 and transfers the retrieved file to the user terminal unit 2. The file of the content transferred from the customer file managing server 14 is stored to the hard disk drive or the like of the user terminal unit 2.

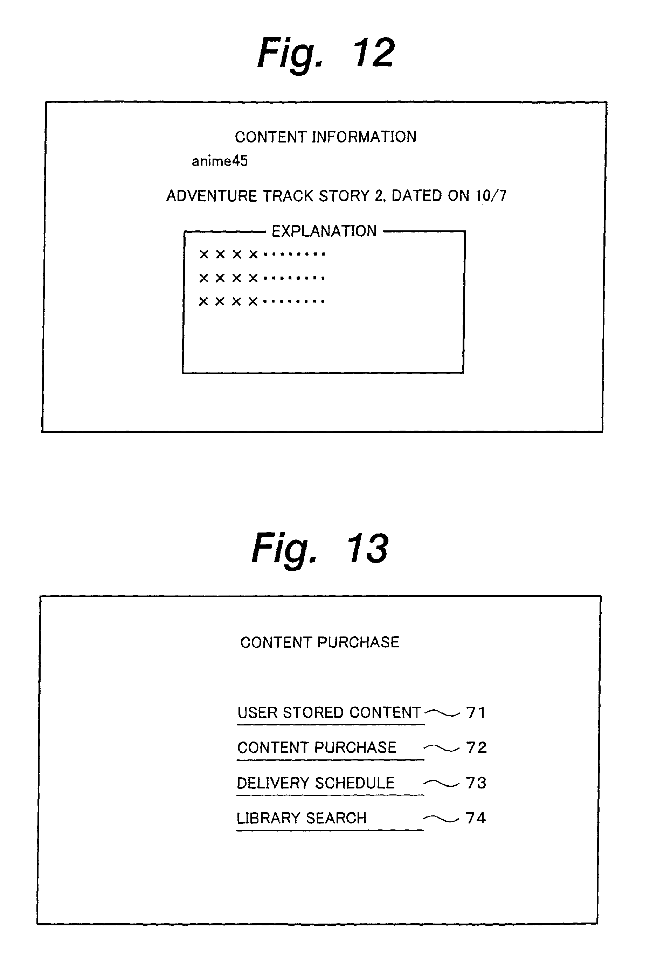

On the user home page shown in Fig. 10, when the user clicks the content purchase indication 56, as shown in Fig. 13, a content purchase page is transmitted to the user terminal unit 2. The content purchase page displays a purchase request indication 71, a purchase confirmation indication 72, a delivery schedule indication 73, and a library search indication 74.

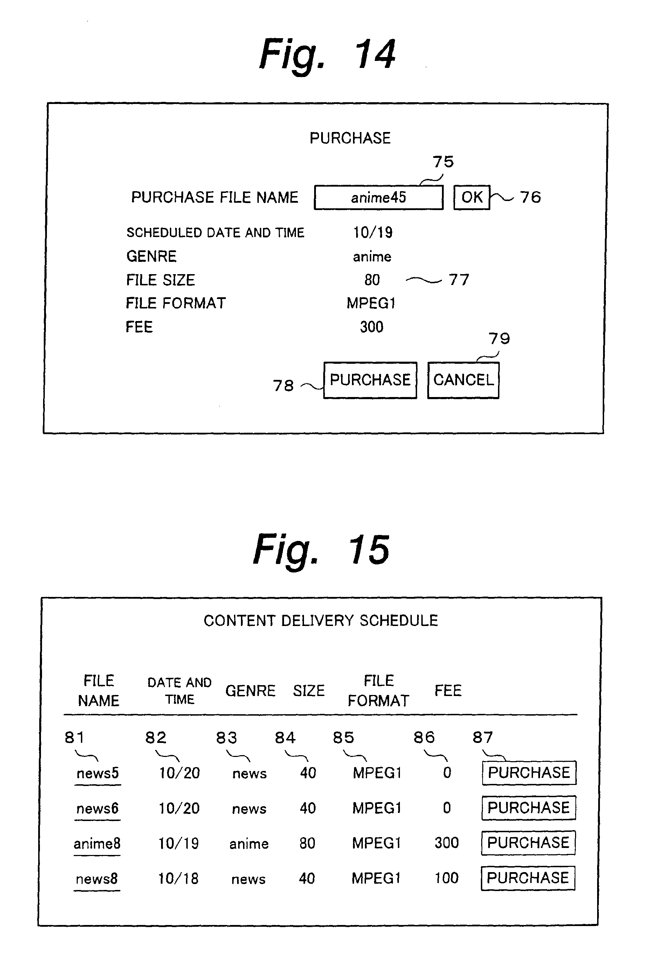

When the user clicks the purchase request indication 71, as shown in Fig. 14, a purchase page is transmitted to the user terminal unit 2. The purchase page displays a purchase file name input box 75. When the user inputs a desired file name to the input box 75 and clicks an OK button 76, a search request command for the file is transmitted from the user terminal unit 2. The search request command for the file is transmitted to the library managing server 12 through the network 3.

When the library managing server 12 receives the search request command for the file, the library managing server 12 searches the database shown in Fig. 2 for a content with the designated file name. When the database contains the content with the designated file name, the library managing server 12 retrieves the content from the database and transmits the information of the content to the user terminal unit 2. The purchase page displays an indication 77 for the information about the content as shown in Fig. 14.

The user can check that the indication 77 for the information about the content displays the desired content. When the user wants to purchase the content, he or she clicks a purchase button 78.

When the user clicks the purchase button 78, a purchase request command for the file is transmitted from the user terminal unit 2. The purchase request command for the file is transmitted to the delivery managing server 16 through the network 3.

When the delivery managing server 16 receives the purchase request command for the file, the delivery managing server 16 registers the file purchased state to the delivery managing database shown in Fig. 5 and sends a command for copying the file to the user area 18 of the user who requested the file to the library managing server 12.

When the library managing server 12 receives the copy command, the library managing server 12 searches the content library 11 for the file. When the content library 11 contains the file, the library managing server 12 retrieves data of the file of the content from the content library 11, and copies the data to the designated user area 18 of the customer file storage 13. As a result, the content purchasing process is completed.

When the file is scheduled to be delivered later, the library managing server 12 notifies the delivery managing server 16 of the scheduled delivery date. On the scheduled delivery date, the delivery managing server 16 sends a copy command for copying the file to the user area 18 of the user who requested the file to the library managing server 12. When the library managing server 12 receives the copy command, the library managing server 12 searches the content library 11 for the file. When the content library 11 contains the file, the library managing server 12 retrieves the file from the content library 11 and copies the data of the file to the designated user area 18 of the customer file storage 13. As a result, the content purchasing process is completed.

After the file of a content is retrieved from the library corresponding to a purchase request of a user, the data of the file is copied to the user area 18 of the user who requested the file and then the content is purchased, a charging process is performed corresponding to the fee of the content.

When the user clicks the delivery schedule indication 73 shown in Fig. 13, a scheduled delivery content list page is transmitted to the user terminal unit 2. The scheduled delivery content list page displays a file name indication 81, a scheduled delivery date and time indication 82, a genre indication 83, a size indication 84, a file format indication 85, a fee indication 86, and a purchase button 87.

When the user wants to purchase a content on the scheduled delivery content list page, he or she clicks the purchase button 87. When the user clicks the purchase button 87, the purchase page shown in Fig. 14 appears. On the purchase page, the file name box 75 indicates the file name of the file that the user wants to purchase. As was described above, on the purchase page, the user can purchase the data of the file of the content.

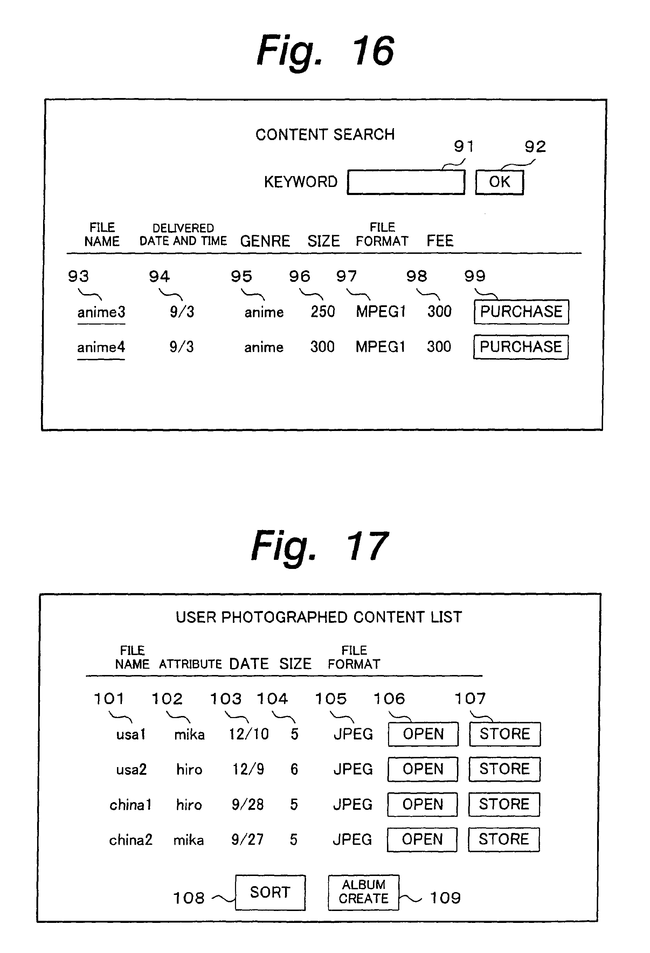

When the user clicks the library search indication 74 shown in Fig. 13, a content search page shown in Fig. 16 appears. The content search page display a keyword input box 91.

When the user wants to search a content from the library or checks for a content that is scheduled to be delivered later, he or she inputs a keyword of the desired content to the keyword input box 91 on the content search page and then clicks an OK button 92.

When the user inputs a keyword to the keyword input box 91 and clicks the OK button 92, a search request command for a content that contains the keyword is transmitted from the user terminal unit 2. The search request command is transmitted to the library managing server 12 through the network 3.

When the library managing server 12 receives the search request command, the library managing server 12 searches the library for a file that contains the keyword. When the library contains the file, the library managing server 12 displays the file name, the registered date and time, the genre, the size, the file format, and the fee of the file of the content that matches the search condition as a file name indication 93, a registered date and time indication 94, a genre indication 95, a size indication 96, a file format indication 97, and a fee indication 98, respectively.

When the user wants to purchase the content on the content search page, he or she clicks a purchase button 99. When the user clicks the purchase button 99, the purchase page shown in Fig. 14 appears. On the purchase page, the purchase file name input box 75 indicates the file name of the file that the user wants to purchase. On the purchase page, the user can purchase data of the file of the content.

When the user clicks the various service indication 57 on the home page shown in Fig. 10, he or she can use various services. One of the services is an album creating service. In the album creating service, a still picture file that the user photographed is transmitted from the user terminal unit 2 to the customer file managing server 14. The still picture file is stored to the user area 18 of the customer file storage 13. When the dedicated camera 25 is used, the still picture file is automatically uploaded.

As shown in Fig. 17, the user can operate the user terminal unit 2 so as to display a list of still picture files that he or she photographed. The still picture file list displays the file name, the attribute, the registered date and time, the size, and the file format of the file of each content as a file name indication 101, an attribute indication 102, a registered date and time indication 103, a size indication 104, and a file format indication 105, respectively. The row of each content displays a sort button 108 and an album create button 109.

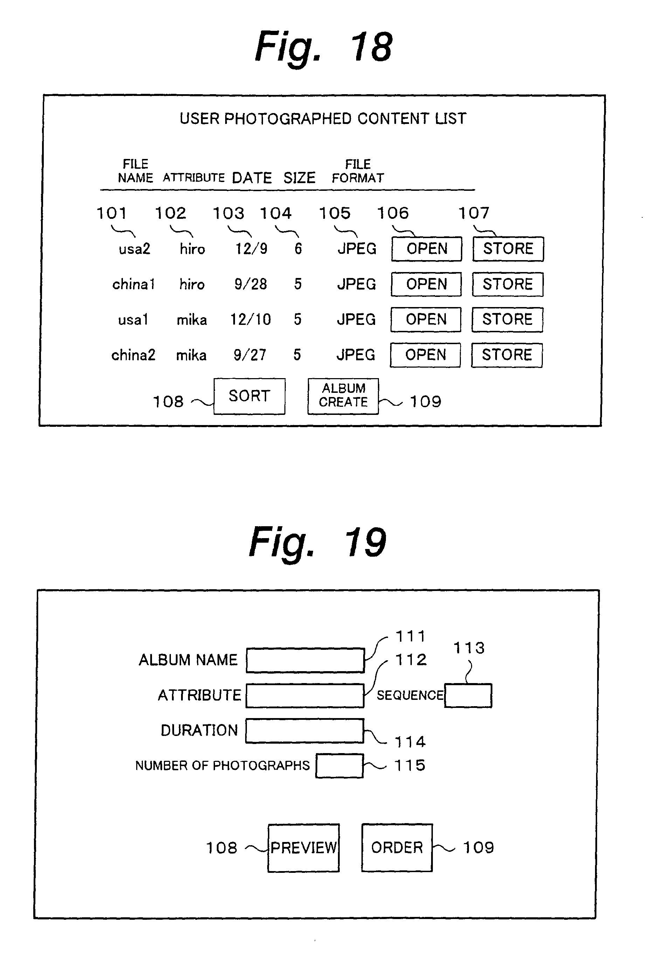

When a still picture file is uploaded from the user terminal unit 2, the photograph file managing server 20 compares pre-registered information with information of the uploaded file and performs a similarity searching process for determining reference information that is similar to the uploaded still picture file. Corresponding to the determined result, an attribute is added to the uploaded still picture file. When the user clicks the sort button 108, the photograph file managing server 20 sorts the still picture files corresponding to each attribute as shown in Fig. 18.

When the user presses the album create button 109, an album creating page shown in Fig. 19 appears. The album creating page displays an album name input box 111, an attribute input box 112, a sequence input box 113, a duration input box 114, a "number of photographs" input box 115, and so forth.

When the user designates a desired attribute in the attribute input box, an album of photographs corresponding to the designated attribute can be created. When a family is designated as an attribute, an album of still picture files of the family members can be created.

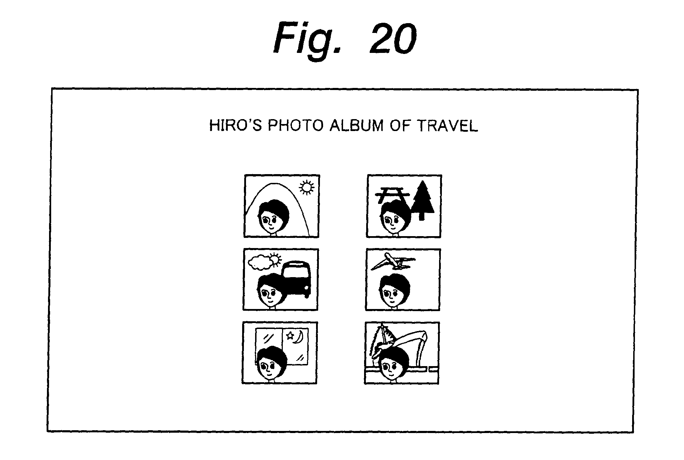

When the user inputs relevant data to the album name input box 111, the attribute input box 112, the sequence input box 113, the duration input box 114, the "number of photographs" input box 115, and so forth and then clicks a preview button 116, an image of an album that is created is displayed as shown in Fig. 20. When the user clicks an order button 117, the album is created and delivered to the user.

According to the present invention, a content managing company has a content library, a library managing server, a customer file storage, a customer file managing server, a delivery managing database, and a delivery managing server. The content library stores many contents that the content managing company provides and sells. The library managing server manages the content library. The customer file storage stores contents of users. The customer file managing server manages the customer file storage. The delivery managing database stores delivery information. The delivery managing server manages the delivery of contents. In the customer file storage, user areas are assigned for individual users. A user terminal unit is connected to a server of the content managing company through a network.

The customer file storage provides a user area for storing a content to a user who made a contract with the content managing company. The user can freely use the user area of the customer file storage in the range of the contracted capacity while the contract is valid. The user can add, delete, and move a content stored in the user area. In addition, the user can store the file of a content that he or she has purchased to the user area.

When the user makes a contract with the content managing company, it delivers or lends a dedicated camera to the user. The dedicated camera has a memory that stores user information.

When the dedicated camera is attached to the user terminal unit, the authenticating process is immediately performed and completed without need to input the user ID and the password of the user. Thereafter, the user can use the service of the content managing company.

Still picture files stored in the dedicated camera are automatically transmitted and stored to the user area of the customer file managing server of the content managing company. At that point, since picture data that has been formatted in a special manner or encrypted cannot be reproduced by a conventional personal computer, the picture data is restored or decrypted to a normal file. The resultant file is stored to the user area. Thus, the contents are protected.

Thus, the dedicated camera can be used for authenticating the user. In addition, since the dedicated camera can be used for the album creating service and so forth, the services of the content managing company are improved and their use is promoted.

Although the present invention has been shown and described with respect to a best mode embodiment thereof, it should be understood by those skilled in the art that the foregoing and various other changes, omissions, and additions in the form and detail thereof may be made therein without departing from the spirit and scope of the present invention.

## Claims

1. A content managing system having a content managing portion comprising:
customer file storing means, having a plurality of areas, assigned to individual users, for storing files of contents for the users; and
customer file managing means for managing said customer file storing means,
wherein the content managing portion and a user terminal unit are connected through a network, and
wherein the user terminal unit operates the content managing portion through the network so as to manage the files of the contents for the users,
the content managing system comprising:
a dedicated device for uploading a content to each user area.

2. The content managing system as set forth in claim 1,
wherein said dedicated device is a camera for storing a photographed picture file.

3. The content managing system as set forth in claim 2,
wherein said dedicated device is a camera for storing a picture file photographed in a unique format.

4. The content managing system as set forth in claim 3,
wherein when a picture file is uploaded from said dedicated device to each user area of said customer file storing means of the content managing portion, the picture file of the unique format is converted into a picture file of a general purpose format.

5. The content managing system as set forth in claim 1,
wherein said dedicated device stores personal information of a user thereof, and
wherein when said dedicated device has been connected to the user terminal unit, an authenticating process for logging in the user terminal to the content managing portion is performed with the personal information stored in said dedicated device.

6. A content managing method having a content managing portion for assigning areas of a storage to individual users and storing files of contents for the individual users to the areas for the individual users, the content managing portion and a user terminal unit being connected through a network, the user terminal unit operating the content managing portion through the network so as to manage the files of the contents for the users, the method comprising the step of:
providing a dedicated device for uploading a content to each user area.

7. The content managing method as set forth in claim 6,
wherein the dedicated device is a camera for storing a photographed picture file.

8. The content managing method as set forth in claim 7,
wherein the dedicated device is a camera for storing a picture file photographed in a unique format.

9. The content managing method as set forth in claim 8,
wherein when a picture file is uploaded from the dedicated device to each user area of the customer file storing means of the content managing portion, the picture file of the unique format is converted into a picture file of a general purpose format.

10. The content managing method as set forth in claim 6,
wherein the dedicated device stores personal information of a user thereof, and
wherein when the dedicated device has been connected to the user terminal unit, an authenticating process for logging in the user terminal to the content managing portion is performed with the personal information stored in the dedicated device.

11. A camera apparatus, comprising:
a personal information memory for storing personal information;
picture storing memory for storing a photographed picture file; and
connecting means for connecting the camera apparatus to a user terminal unit,
wherein when the user terminal unit is logged in through a network, an authenticating process is performed with the personal information stored in said personal information memory.
